# EUROPEAN PATENT APPLICATION

(11) **EP 4 822 956 A1**
(43) Date of publication of application: **14.10.2026**
(21) Application number: 25169694.4
(22) Date of filing: 10.04.2025
(51) Int. Cl.: H02K 5/15, H02K 5/24

(54) **ELECTRIC MACHINE**

(71) Applicant: ABB SCHWEIZ AG, 5400 Baden (CH)
(72) Inventor: Aarnivuo, Samu, 00380 Helsinki (FI); Mäkinen, Antti, 00380 Helsinki (FI)
(74) Representative: Kolster Oy Ab

(57) **Abstract**

The present invention relates to the field of electric machines, such as electric motors and electric generators for industrial applications, and more particularly to an electric machine. The electric machine (1) of the present invention comprises a comprises: a rotor comprising a shaft (2) and a rotor core supported on the shaft (2); a stator surrounding the rotor; a frame comprising a frame casing (3) surrounding the stator and at least one frame end plate (4) with a round opening at the drive end and/or at the non-drive end of the electric machine (1); and an end shield (20) secured to said at least one frame end plate (4), said end shield (20) covering said round opening (5) of the frame end plate (4) and having an opening for the drive shaft (2), wherein said end shield (20) is a non-circular end shield (20) having essentially vertically upright side edges (21, 22) extending in horizontal direction close to the edges of said frame end plate (4) of the frame of said electric machine (1).

## Description

### FIELD OF THE INVENTION

The present invention relates to the field of electric machines, such as electric motors and electric generators for industrial applications, and more particularly to an electric machine.

### BACKGROUND OF THE INVENTION

Electric machines, such as electric motors and electric generators, are used in industry for different applications, such as electric motors within the transportation industry, within the process and manufacturing industry as well as within the energy industry.

An electric motor converts electrical energy into mechanical energy. Most electric motors operate through the interaction of magnetic fields and current-carrying conductors to generate force. Electric motors are found in applications as diverse as industrial applications, small and medium size industrial motors of highly standardized dimensions and characteristics provide convenient mechanical power for industrial uses. Larger electric motors are used for propulsion of ships in ship propulsion unit applications of the marine industry, for pipeline compressors, and for water pumps with ratings in the millions of watts.

An electric generator converts mechanical energy to electricity for transmission and distribution over power lines to domestic, commercial, and industrial customers. In electricity generation, an electric generator can be used e.g. for converting the energy from steam turbines, gas turbines, water turbines, internal combustion engines, wind turbines into electrical energy.

The electric machine comprises a rotor comprising a shaft and a rotor core supported on the shaft, a stator surrounding the rotor, and a machine frame surrounding the stator. The shaft is typically supported with bearing arrangements on both ends of the machine, i.e. on a drive end of the machine and on a non-drive end of the machine. The new innovation adds significantly more stiffness to the shield structure of electric machines with minimal extra costs. Stiffer structure means more reliability, better quality, increased performance and less issues due to vibration. Furthermore, the design can be used to re-direct the force flows in the machine ends decreasing the risk of high stress concentrations and fatigue issues.

Electric machines, such as large electric motors and electric generators, often comprise structures made of welded steel plates. The machine ends are typically one large rectangular steel plate with a round hole in it for the rotor installation. This round hole is typically covered with some structure added to support the bearings. Such a structure is an end shield which is a round plate/casting. The round end shield itself can be made relatively stiff with added stiffening struts, etc. However, as the shield is round and it is not covering, the whole end of the machine, the not so stiff end shield of the machine frame is not prevented from deflecting axially which also decreases the transversal stiffness of the end shield structure due to cross linkage of stiffness properties.

There is a demand, in large motors and generators, for an electrical machine having an improved end structure for the drive end and/or for the non-drive end of the electric machine, which would be stiffer and more resilient to fatigue damage.

### BRIEF DESCRIPTION OF THE INVENTION

The object of the invention is to introduce an electric machine, which would provide a solution having an improved end structure for the drive end and/or for the non-drive end of the electric machine, which would be stiffer and more resilient to fatigue damage. Advantageous embodiments are furthermore presented.

It is brought forward a new electric machine which comprises: a rotor comprising a shaft and a rotor core supported on the shaft; a stator surrounding the rotor; a frame comprising a frame casing surrounding the stator and at least one frame end plate with a round opening at the drive end and/or at the non-drive end of the electric machine; and an end shield secured to said at least one frame end plate, said end shield covering said round opening of the frame end plate and having an opening for the shaft, wherein said end shield is a non-circular end shield having essentially vertically upright side edges extending in horizontal direction close to the edges of said frame end plate of the frame of said electric machine.

In a preferred embodiment, the horizontal width of said end shield is greater than the upright vertical height of said end shield.

In a preferred embodiment, said end shield comprises at least two horizontal stiffening elements.

In a preferred embodiment, said end shield comprises at least two vertical stiffening elements.

In a preferred embodiment, said at least two horizontal stiffening elements and/or said at least two vertical stiffening elements extend close to the edges of said frame end plate of the frame of said electric machine.

In a preferred embodiment, said at least two horizontal stiffening elements and/or said at least two vertical stiffening elements are steel beam stiffening elements.

In a preferred embodiment, the steel beam stiffening elements are welded to said end shield.

In a preferred embodiment, the steel beam stiffening elements are secured to said end shield by means of mounting bolts.

In a preferred embodiment, said end shield is secured to said frame end plate by means of mounting bolts.

In a preferred embodiment, several of said mounting bolts are placed close to said steel beam stiffening elements of said end shield.

In a preferred embodiment, said end shield is secured to the feet of the electric machine.

In a preferred embodiment, a horizontal stiffening element of said end shield is secured to the feet of the electric machine.

In a preferred embodiment, said electric machine comprises a bearing arrangement attached to said end shield.

In a preferred embodiment, said electric machine is an electrical motor.

In a preferred embodiment, said electric machine is an electrical generator.

### BRIEF DESCRIPTION OF THE DRAWINGS

In the following, the present invention will be described in more detail by way of example and with reference to the attached drawings, in which:
Figure 1 shows an exemplary illustration of one embodiment of an electric machine according to the present invention.
Figure 2 shows an exemplary illustration of one embodiment of an end of an electric machine according to the present invention.
Figure 3 shows an exemplary illustration of another embodiment of an end of an electric machine according to the present invention.
Figure 4 shows an exemplary illustration of a third embodiment of an end of an electric machine according to the present invention.
Figure 5 shows an exemplary illustration of a fourth embodiment of an end of an electric machine according to the present invention.
Figure 6 shows an exemplary illustration of a fifth embodiment of an end of an electric machine according to the present invention.
Figure 7 shows an exemplary illustration of a sixth embodiment of an end of an electric machine according to the present invention.
The foregoing aspects, features and advantages of the invention will be apparent from the drawings and the detailed description related thereto.
In the following, the invention will be described in greater detail by means of preferred embodiments with reference to the accompanying drawings of Figures 1 to 7.

### DETAILED DESCRIPTION

The following embodiments are exemplary. Although the description may refer to "an", "one", or "some" embodiment(s) in several locations, this does not necessarily mean that each such reference is to the same embodiment(s), or that the feature only applies to a single embodiment, for example. Single features of different embodiments may also be combined to provide other embodiments. Generally, all terms and expressions used should be interpreted broadly and they are intended to illustrate, not to restrict, the embodiments. The figures only show components necessary for understanding the various embodiments. The number and/or shape of the various elements, and generally their implementation, could vary from the examples shown in the figures. The application of the various embodiments described herein is not limited to any specific system, but it can be used in connection with various applications.

The electric machine of the present invention comprises: a rotor comprising a shaft and a rotor core supported on the shaft; a stator surrounding the rotor; a frame comprising a frame casing surrounding the stator and at least one frame end plate with a round opening at the drive end and/or at the non-drive end of the electric machine; and an end shield secured to said at least one frame end plate, said end shield covering said round opening of the frame end plate and having an opening for the shaft, wherein said end shield is a non-circular end shield having essentially vertically upright side edges extending in horizontal direction close to the edges of said frame end plate of the frame of said electric machine.

When referring to end shield having "essentially vertically upright side edges", in this application it is meant to comprise any end shield having side edges, which side edges are essentially vertically upright, i.e. essentially perpendicular in relation to the foundation level, the term "essentially" giving a tolerance of +/- 10 degrees from the vertically upright.

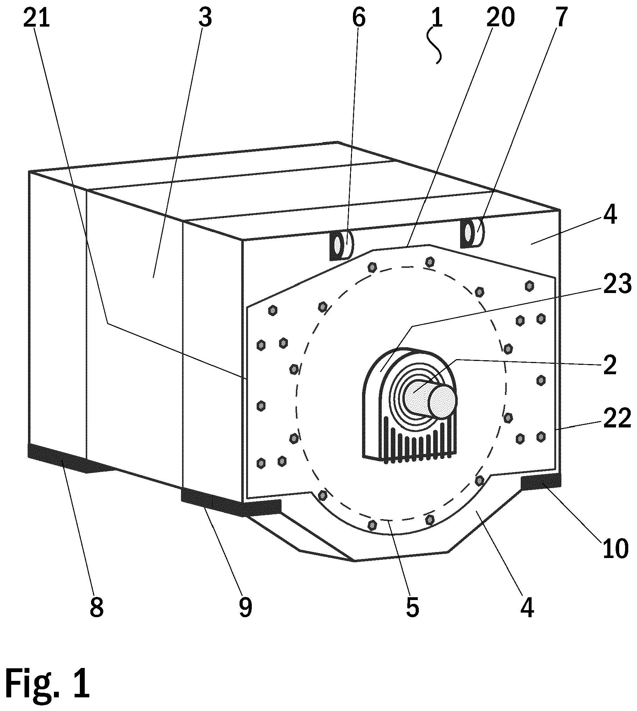

Figure 1 shows an exemplary illustration of one embodiment of an electric machine according to the present invention. In the presented embodiment the electric machine 1 comprises a rotor and a stator surrounding the rotor, the rotor comprising a shaft 2 and a rotor core supported on the shaft 2. The electric machine 1 comprises a frame comprising a frame casing 3 surrounding the stator, and at the drive end of said electric machine said frame comprising a frame end plate 4 with a round opening 5, here indicated with a broken line. In the presented embodiment the electric machine 1 also comprises lifting lugs 6, 7. In the presented embodiment the feet 8-10 of the electric machine 1 are marked with reference numbers 8-10.

In the presented embodiment the electric machine 1 also comprises an end shield 20 secured to said frame end plate 4 of the electric machine 1. In the presented embodiment the end shield 20 of the electric machine 1 covers the round opening 5 of the frame end plate 4 and has an opening for the shaft 2.

In the presented embodiment the end shield 20 of the electric machine 1 is a non-circular end shield 20 having essentially vertically upright side edges 21, 22 extending in horizontal direction close to the edges of said frame end plate 4 of the frame of said electric machine 1. In the presented embodiment the horizontal width of said the end shield 20 of the electric machine 1 is greater than the upright vertical height of said end shield. In the presented embodiment the electric machine 1 also comprises a bearing arrangement 23 attached to said end shield 20. In an embodiment said bearing arrangement may comprise flange-mounted sleeve bearings. In another embodiment said electric machine is an electrical motor. In yet another embodiment said electric machine is an electrical generator.

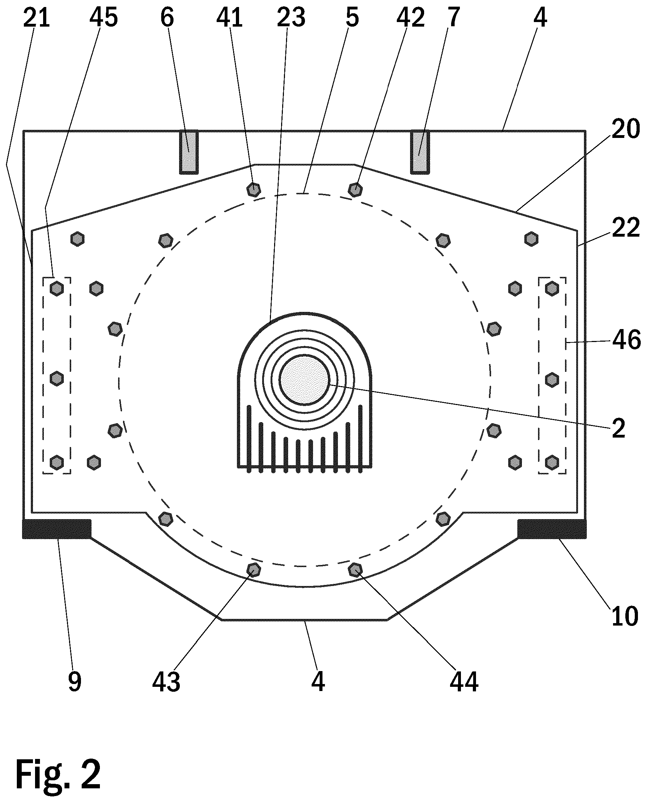

Figure 2 shows an exemplary illustration of one embodiment of an end of an electric machine according to the present invention. In the presented embodiment the electric machine 1 comprises a rotor and a stator surrounding the rotor, the rotor comprising a shaft 2 and a rotor core supported on the shaft 2. The electric machine comprises a frame comprising a frame casing surrounding the stator, and at the end of said electric machine said frame comprising at least one frame end plate 4 with a round opening 5 at the drive end and/or at the non-drive end of the electric machine, here indicated with a broken line. In the presented embodiment the electric machine 1 also comprises lifting lugs 6, 7. In the presented embodiment the feet 9, 10 at the end of said electric machine 1 are marked with reference numbers 9, 10.

In the presented embodiment the electric machine 1 also comprises an end shield 20 secured to said frame end plate 4 of the electric machine 1. In the presented embodiment the end shield 20 of the electric machine 1 covers the round opening 5 of the frame end plate 4 and has an opening for the shaft 2. In the presented embodiment the end shield 20 of the electric machine 1 is a non-circular end shield 20 having essentially vertically upright side edges 21, 22 extending in horizontal direction close to the edges of said frame end plate 4 of the frame of said electric machine 1. In the presented embodiment the horizontal width of said the end shield 20 of the electric machine 1 is greater than the upright vertical height of said end shield. In the presented embodiment the electric machine 1 also comprises a bearing arrangement 23 attached to said end shield 20. In an embodiment said bearing arrangement may comprise flange-mounted sleeve bearings. In another embodiment, said electric machine is an electrical motor. In yet another embodiment, said electric machine is an electrical generator.

In the presented embodiment the end shield 20 is secured to said frame end plate 4 of the electric machine 1 by means of mounting bolts 41-46. In the presented embodiment some of the mounting bolts 41-44 are arranged for securing the end shield 20 near the round opening 5 of the frame end plate 4. Furthermore, some of the mounting bolts 45, 46 are arranged for securing the side edges 21, 22 of the end shield 20 to the edges of said frame end plate 4 of the electric machine 1. The securing of the end shield 20 along the side edges 21, 22 of the end shield 20 considerably increases the stiffness of the end shield 20 and of the end structure and considerably improves fatigue strength of the end shield 20 and of the end structure.

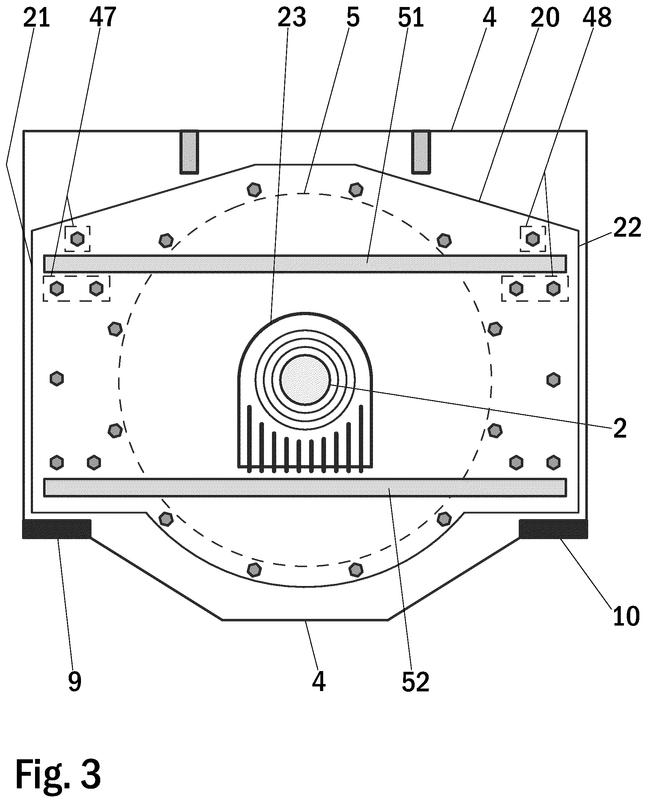

Figure 3 shows an exemplary illustration of another embodiment of an end of an electric machine according to the present invention. In the presented embodiment the electric machine 1 comprises a rotor and a stator surrounding the rotor, the rotor comprising a shaft 2 and a rotor core supported on the shaft 2. The electric machine comprises a frame comprising a frame casing surrounding the stator, and at the end of said electric machine said frame comprising at least one frame end plate 4 with a round opening 5 at the drive end and/or at the non-drive end of the electric machine, here indicated with a broken line. In the presented embodiment the feet 9, 10 at the end of said electric machine 1 are marked with reference numbers 9, 10. In the presented embodiment the electric machine 1 also comprises a bearing arrangement 23 attached to said end shield 20.

In the presented embodiment the electric machine 1 also comprises an end shield 20 secured to said frame end plate 4 of the electric machine 1. In the presented embodiment the end shield 20 of the electric machine 1 covers the round opening 5 of the frame end plate 4 and has an opening for the shaft 2. In the presented embodiment the end shield 20 of the electric machine 1 is a non-circular end shield 20 having essentially vertically upright side edges 21, 22 extending in horizontal direction close to the edges of said frame end plate 4 of the frame of said electric machine 1. In the presented embodiment the end shield 20 comprises two horizontal stiffening elements 51, 52. In an alternative embodiment the end shield 20 may comprise only one horizontal stiffening element. In another alternative embodiment the end shield 20 may comprise three or more horizontal stiffening elements. The two horizontal stiffening elements 51, 52 extend close to the edges of said frame end plate 4 of the frame of said electric machine 1. The two horizontal stiffening elements 51, 52 may be steel beam stiffening elements 51, 52. In an embodiment, the two horizontal stiffening elements 51, 52 may be welded to said end shield 20. In an embodiment, the two horizontal stiffening elements 51, 52 may be secured to said end shield 20 by means of mounting bolts. In an embodiment, said end shield 20 may be machined to comprise the two horizontal stiffening elements 51, 52.

In the presented embodiment the end shield 20 is secured to said frame end plate 4 of the electric machine 1 by means of mounting bolts 41-48. In the presented embodiment some of the mounting bolts 47, 48 are arranged for securing the end shield 20 close to said horizontal stiffening elements 51, 52 of said end shield 20, e.g. along the weld seam of the horizontal stiffening elements 51, 52. The horizontal stiffening elements 51, 52 as well as the securing of the end shield 20 along the weld seam of the horizontal stiffening elements 51, 52 of the end shield 20 considerably increase the stiffness of the end shield 20 and of the end structure and considerably improve fatigue strength of the end shield 20 and of the end structure.

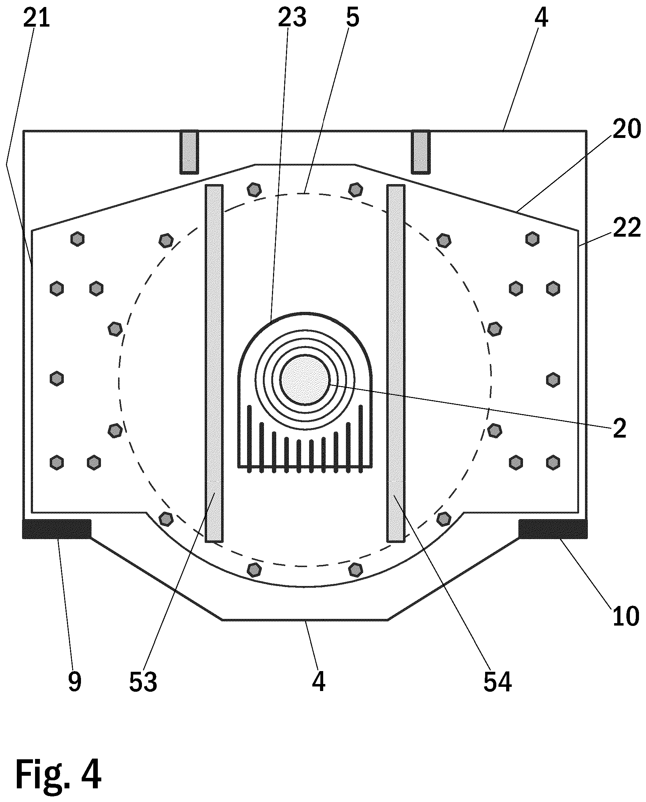

Figure 4 shows an exemplary illustration of a third embodiment of an end of an electric machine according to the present invention. In the presented embodiment the electric machine 1 comprises a rotor and a stator surrounding the rotor, the rotor comprising a shaft 2 and a rotor core supported on the shaft 2. The electric machine comprises a frame comprising a frame casing surrounding the stator, and at the end of said electric machine said frame comprising at least one frame end plate 4 with a round opening 5 at the drive end and/or at the non-drive end of the electric machine, here indicated with a broken line. In the presented embodiment the feet 9, 10 at the end of said electric machine 1 are marked with reference numbers 9, 10. In the presented embodiment the electric machine 1 also comprises a bearing arrangement 23 attached to said end shield 20.

In the presented embodiment the electric machine 1 also comprises an end shield 20 secured to said frame end plate 4 of the electric machine 1. In the presented embodiment the end shield 20 of the electric machine 1 covers the round opening 5 of the frame end plate 4 and has an opening for the shaft 2. In the presented embodiment the end shield 20 of the electric machine 1 is a non-circular end shield 20 having essentially vertically upright side edges 21, 22 extending in horizontal direction close to the edges of said frame end plate 4 of the frame of said electric machine 1. In the presented embodiment the end shield 20 comprises two vertical stiffening elements 53, 54. In an alternative embodiment the end shield 20 may comprise only one vertical stiffening element. In another alternative embodiment the end shield 20 may comprise three or more vertical stiffening elements. The two vertical stiffening elements 53, 54 may extend close to the edges of said frame end plate 4 of the frame of said electric machine 1. The two vertical stiffening elements 53, 54 may be steel beam stiffening elements 53, 54. In an embodiment, the two vertical stiffening elements 53, 54 may be welded to said end shield 20. In an embodiment, the two vertical stiffening elements 53, 54 may be secured to said end shield 20 by means of mounting bolts. In an embodiment, said end shield 20 may be machined to comprise the two vertical stiffening elements 53, 54. The vertical stiffening elements 53, 54 of the end shield 20 increase the stiffness of the end shield 20 and of the end structure and improve fatigue strength of the end shield 20 and of the end structure.

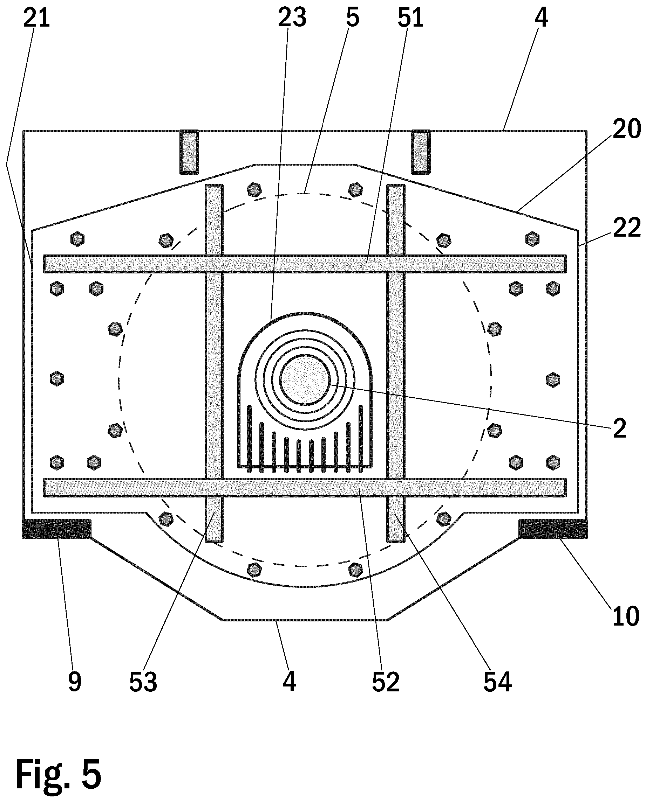

Figure 5 shows an exemplary illustration of a fourth embodiment of an end of an electric machine according to the present invention. In the presented embodiment the electric machine 1 comprises a rotor and a stator surrounding the rotor, the rotor comprising a shaft 2 and a rotor core supported on the shaft 2. The electric machine comprises a frame comprising a frame casing surrounding the stator, and at the end of said electric machine said frame comprising at least one frame end plate 4 with a round opening 5 at the drive end and/or at the non-drive end of the electric machine, here indicated with a broken line. In the presented embodiment the feet 9, 10 at the end of said electric machine 1 are marked with reference numbers 9, 10. In the presented embodiment the electric machine 1 also comprises a bearing arrangement 23 attached to said end shield 20.

In the presented embodiment the electric machine 1 also comprises an end shield 20 secured to said frame end plate 4 of the electric machine 1. In the presented embodiment the end shield 20 of the electric machine 1 covers the round opening 5 of the frame end plate 4 and has an opening for the shaft 2. In the presented embodiment the end shield 20 of the electric machine 1 is a non-circular end shield 20 having essentially vertically upright side edges 21, 22 extending in horizontal direction close to the edges of said frame end plate 4 of the frame of said electric machine 1. In the presented embodiment the end shield 20 comprises two horizontal stiffening elements 51, 52 and the two vertical stiffening elements 53, 54. The two horizontal stiffening elements 51, 52 and the two vertical stiffening elements 53, 54 may extend close to the edges of said frame end plate 4 of the frame of said electric machine 1. The two horizontal stiffening elements 51, 52 and two vertical stiffening elements 53, 54 may be steel beam stiffening elements 51-54. In an embodiment, the two horizontal stiffening elements 51, 52 and the two vertical stiffening elements 53, 54 may be welded to said end shield 20. In an embodiment, the two horizontal stiffening elements 51, 52 and the two vertical stiffening elements 53, 54 may be secured to said end shield 20 by means of mounting bolts. In an embodiment, said end shield 20 may be machined to comprise the two horizontal stiffening elements 51, 52 and the two vertical stiffening elements 53, 54.

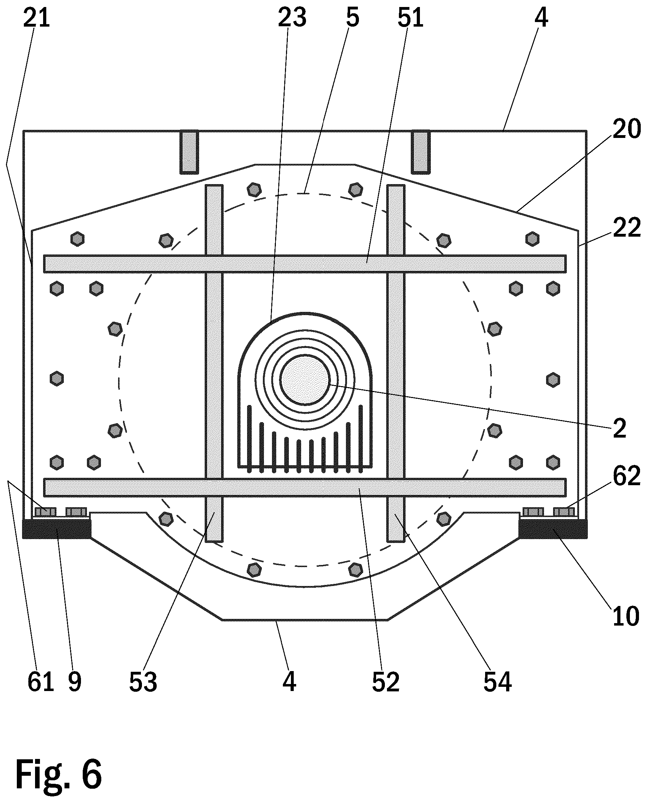

Figure 6 shows an exemplary illustration of a fifth embodiment of an end of an electric machine according to the present invention. In the presented embodiment the electric machine 1 comprises a rotor and a stator surrounding the rotor, the rotor comprising a shaft 2 and a rotor core supported on the shaft 2. The electric machine comprises a frame comprising a frame casing surrounding the stator, and at the end of said electric machine said frame comprising at least one frame end plate 4 with a round opening 5 at the drive end and/or at the non-drive end of the electric machine, here indicated with a broken line. In the presented embodiment the feet 9, 10 at the end of said electric machine 1 are marked with reference numbers 9, 10. In the presented embodiment the electric machine 1 also comprises a bearing arrangement 23 attached to said end shield 20.

In the presented embodiment the electric machine 1 also comprises an end shield 20 secured to said frame end plate 4 of the electric machine 1. In the presented embodiment the end shield 20 of the electric machine 1 covers the round opening 5 of the frame end plate 4 and has an opening for the shaft 2. In the presented embodiment the end shield 20 of the electric machine 1 is a non-circular end shield 20 having essentially vertically upright side edges 21, 22 extending in horizontal direction close to the edges of said frame end plate 4 of the frame of said electric machine 1. In the presented embodiment the end shield 20 comprises two horizontal stiffening elements 51, 52 and two vertical stiffening elements 53, 54.

In the presented embodiment the end shield 20 is secured to the feet 9, 10 of the electric machine 1 by means of mounting bolts 61, 62. The securing of the end shield 20 to the feet 9, 10 of the electric machine 1 considerably increases the stiffness of the end shield 20 and of the end structure and considerably improves fatigue strength of the end shield 20 and of the end structure.

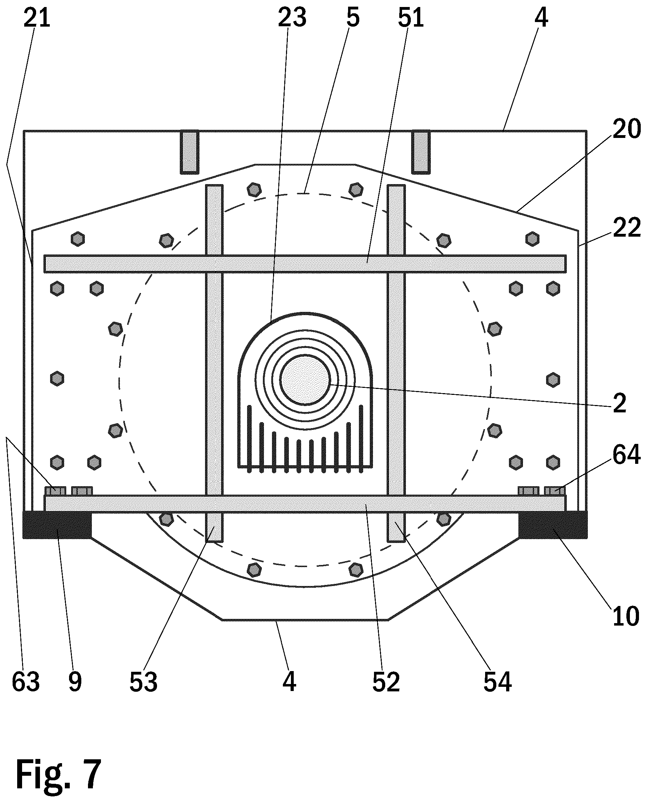

Figure 7 shows an exemplary illustration of a sixth embodiment of an end of an electric machine according to the present invention. In the presented embodiment the electric machine 1 comprises a rotor and a stator surrounding the rotor, the rotor comprising a shaft 2 and a rotor core supported on the shaft 2. The electric machine comprises a frame comprising a frame casing surrounding the stator, and at the end of said electric machine said frame comprising at least one frame end plate 4 with a round opening 5 at the drive end and/or at the non-drive end of the electric machine, here indicated with a broken line. In the presented embodiment the feet 9, 10 at the end of said electric machine 1 are marked with reference numbers 9, 10. In the presented embodiment the electric machine 1 also comprises a bearing arrangement 23 attached to said end shield 20.

In the presented embodiment the electric machine 1 also comprises an end shield 20 secured to said frame end plate 4 of the electric machine 1. In the presented embodiment the end shield 20 of the electric machine 1 covers the round opening 5 of the frame end plate 4 and has an opening for the shaft 2. In the presented embodiment the end shield 20 of the electric machine 1 is a non-circular end shield 20 having essentially vertically upright side edges 21, 22 extending in horizontal direction close to the edges of said frame end plate 4 of the frame of said electric machine 1. In the presented embodiment the end shield 20 comprises two horizontal stiffening elements 51, 52 and two vertical stiffening elements 53, 54.

In the presented embodiment a horizontal stiffening element 52 of the end shield 20 is secured to the feet 9, 10 of the electric machine 1 by means of mounting bolts 63, 64. The securing of the horizontal stiffening element 52 of the end shield 20 to the feet 9, 10 of the electric machine 1 considerably increases the stiffness of the end shield 20 and of the end structure, and considerably improves fatigue strength of the end shield 20 and of the end structure. The present invention can be utilized at the end of the electric machine end and/or at the non-drive end of the electric machine.

With the help of the present invention there is provided an advanced electrical machine having an improved end structure, which is stiffer and more resilient to fatigue damage. The solution according to the present invention provides more possibilities for stiffness adjustments.

The solution according to the present invention provides a stiffer structure, which is more reliable, and which brings a better quality, increased performance and less vibration. Furthermore, the design can be used re-direct the force flows in the machine ends, which decreases the risk of high stress concentrations and fatigue issues.

The solution according to the present invention provides an end shield extended to the corners of the machines which considerably stiffens the end shield. Furthermore, with extended contact area, the mounting bolts that are used to fix the shield to the machine frame can be located in more advantageous locations; even so that they both increase the stiffness and improve fatigue strength of the structure.

It is to be understood that the above description and the accompanying Figures are only intended to teach the best way known to the inventors to make and use the invention. It will be apparent to a person skilled in the art that the inventive concept can be implemented in various ways. The above-described embodiments of the invention may thus be modified or varied, without departing from the invention, as appreciated by those skilled in the art in light of the above teachings. It is therefore to be understood that the invention and its embodiments are not limited to the examples described above but may vary within the scope of the claims and their equivalents.

## Claims

1. An electric machine comprising:
- a rotor comprising a shaft and a rotor core supported on the shaft;
- a stator surrounding the rotor;
- a frame comprising a frame casing surrounding the stator and at least one frame end plate with a round opening at the drive end and/or at the non-drive end of the electric machine; and
- an end shield secured to said at least one frame end plate, said end shield covering said round opening of the frame end plate and having an opening for the shaft,
wherein said end shield is a non-circular end shield having essentially vertically upright side edges extending in horizontal direction close to the edges of said frame end plate of the frame of said electric machine.

2. An electric machine according to claim 1, wherein the horizontal width of said end shield is greater than the upright vertical height of said end shield.

3. An electric machine according to claim 1 or claim 2, wherein said end shield comprises at least two horizontal stiffening elements.

4. An electric machine according to any of the claims 1-3, wherein said end shield comprises at least two vertical stiffening elements.

5. An electric machine according to claim 3 or claim 4, wherein said at least two horizontal stiffening elements and/or said at least two vertical stiffening elements extend close to the edges of said frame end plate of the frame of said electric machine.

6. An electric machine according to any of the claims 3-5, wherein said at least two horizontal stiffening elements and/or said at least two vertical stiffening elements are steel beam stiffening elements.

7. An electric machine according to claim 6, wherein the steel beam stiffening elements are welded to said end shield.

8. An electric machine according to claim 6, wherein the steel beam stiffening elements are secured to said end shield by means of mounting bolts.

9. An electric machine according to any of the claims 1-8, wherein said end shield is secured to said frame end plate by means of mounting bolts.

10. An electric machine according to claim 9, wherein several of said mounting bolts are placed close to said steel beam stiffening elements of said end shield.

11. An electric machine according to any of the claims 1-10, wherein said end shield is secured to the feet of the electric machine.

12. An electric machine according to claim 11, wherein a horizontal stiffening element of said end shield is secured to the feet of the electric machine.

13. An electric machine according to any of the claims 1-12, wherein said electric machine comprises a bearing arrangement attached to said end shield.

14. An electric machine according to any of the claims 1-13, wherein said electric machine is an electrical motor.

15. An electric machine according to any of the claims 1-13, wherein said electric machine is an electrical generator.
